(19) Europäisches Patentamt
European Patent Office
Office européen des brevets

(11) **EP 1 855 246 A1**

(12) **EUROPEAN PATENT APPLICATION**

(43) Date of publication:
**14.11.2007 Bulletin 2007/46**

(51) Int Cl.:
***G06Q 30/00*** *(2006.01)*

(21) Application number: **06425319.8**

(22) Date of filing: **11.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **E-Neb S.r.l**
**42033 Carpineti (IT)**

(72) Inventors:
• **Ceci, Stefano**
**42017 Novellara (IT)**
• **Saccardi Pierluigi**
**42030 Vezzano s/c (IT)**

(74) Representative: **Borsano, Corrado**
**Notarbartolo & Gervasi S.p.A.**
**Corso di Porta Vittoria, 9**
**20122 Milano (IT)**

(54) **Method and system for electronic quotation of services, particularly tourist and transport services**

(57)     It is described a method for electronic quotation of service, particularly tourist services, comprising the following steps of:
- creating a Commodity Exchange Subsystem adapted to contain Securities representing said tourist and transport services and to manage trading actions thereof; the Securities represent obligations to provide a service at a certain price;
- creating a Commission Subsystem, adapted to certify and rate said Securities and authorise their issuance on said Commodity Exchange Subsystem.

FIG. 1

**Description**

The present invention relates to a method and system for electronic quotation of services, particularly tourist and transport services.

The systems currently used for selling or purchasing a tourist service, which may range from a stay of a certain length in a certain period) e.g. the second week of August) in a certain hotel and/or tourist facility to purchasing a "package" (comprising travel, stay, excursions, etc.), envisage the presence of a certain number of intermediaries (tour operators, tourist agencies, etc.), each of which is capable of providing to the user only part of the services available on the market at a price which, due to the overheads of the intermediaries, is higher than that asked by the service provider.

In order to offer the broadest and most complete range of available tourist services from which users can choose the one of interest at a lower price than that asked by traditional tourist intermediaries, the applicant has created a method for electronic quotation of tourist services, and system thereof to make finance meet with the economics of tourism, to satisfy the needs of either eliminating or reducing tourist market intermediation, covering possible unsold services and selling high value services as soon as possible.

The object of the present invention is a method for electronic quotation of services, particularly tourist or transport services, comprising the following steps of:

- creating a Commodity Exchange Subsystem, adapted to store documents called Securities, representing said services, and to manage trading operations;
- creating a Commission Subsystem, adapted to certify and rate said Securities and to authorise their issuance on said Commodity Exchange Subsystem;

said Securities being subject to variations of state in said Commodity Exchange Subsystem comprising:

- a "Quotable" state, when they are approved by said Commission Subsystem and transferred to said Commodity Exchange Subsystem;
- a "Quoted" state, in which said Securities are visible and available to be sold;
- a "Purchased" state to which said Securities switch after the sale;
- from said "Purchased" state said Securities being able to either switch to an irreversible "Printed" state in which said Securities can be used, or return to said "Quoted" state, or switch to a "Visible" state from which they can switch to said "Printed" state or return to said "Quoted" state.

It is the particular object of the present invention a method and system for the electronic quotation of services, particularly tourist services, as better described in the claims, which form an integral part of the present description.

Further objects and advantages of the present invention will be apparent from the following detailed description of an example of embodiment of the same and from the accompanying drawings given by the way of non-limitative example, in which:

figure 1 shows a chart related to the logic model on which the system object of the present invention is based;
figure 2 shows a state diagram on which the method object of the present invention is based;
figure 3 shows a block diagram of an example of embodiment of the system.

The service quotation system, particularly for tourist services, object of the invention is also called a Telematic Tourism Commodity Exchange (hereinafter BTT System) which consists in a system adapted to create, organise and rate Securities representing mainly tourist services for subsequent trading.

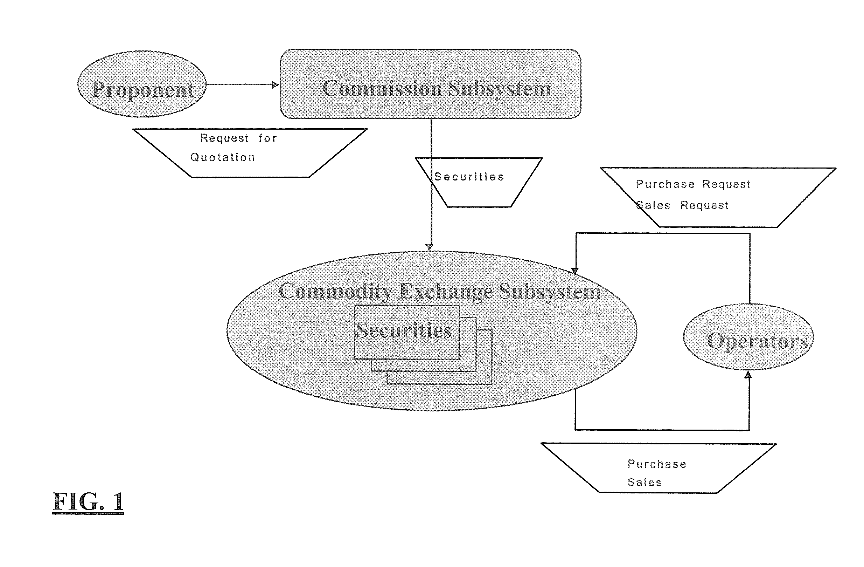

With reference to figure 1, the logical model on which the system is based is as follows.
The BTT System envisages exchange procedures for objects called Securities.
Securities represent mainly tourist or transport services. Each Security is of a certain type, has a definition standard and envisages a certification procedure.
There may be different types of Securities, possibly further subdivided into subtypes, e.g.:

Type: Transports; SubSecurities: Air ticket, Car rental, Ship Charters;
Type: Facility; Subtype: Hotel, Residence, etc.

An example of Security is Type: Facility; Subtype: Hotel, Description: Hotel Sheraton New York Dec. 31st, 07.
The BTT System envisages the following logical organisational subsystems:

Commodity Exchange Subsystem: issues Securities on the BTT System and manages the trading operations.

Commission Subsystem: certifies and rates Securities according to a certain service rating system according to the quality and quantity of the service included in the Security and authorises issuance thereof on the Commodity Exchange Subsystem.

The BTT System envisages the issuance and acquisition of Securities by the following Operator subjects:

Producer: Person or company who provides tourist services and decides to issue them on the market in the form of Securities.
Distributor: Travel agency.
Assembler: Person or company who produces a package at a price: Tour Operators. In the current market, this person composes the value of the final bid.
Customer: Person or company who purchases the Securities and either uses them or sells them off the Commodity Exchange. This may be an individual or organised group. It may also be the distributor or assembler themselves.
Proposer: The operator who asks to issue Securities on the Commission System and who may be one of the Producer, Distributor or Assembler themselves.

The Commission Subsystem receives Quotation Requests as inputs by Proposers and outputs Securities to the Commodity Exchange Subsystem, including assigned certification and rating.
The Commodity Exchange Subsystem receives the following inputs: Securities from the Commission Subsystem; Purchase Requests, Sales Requests from Operators; and outputs: Purchased Securities, Sold Securities to Operators.

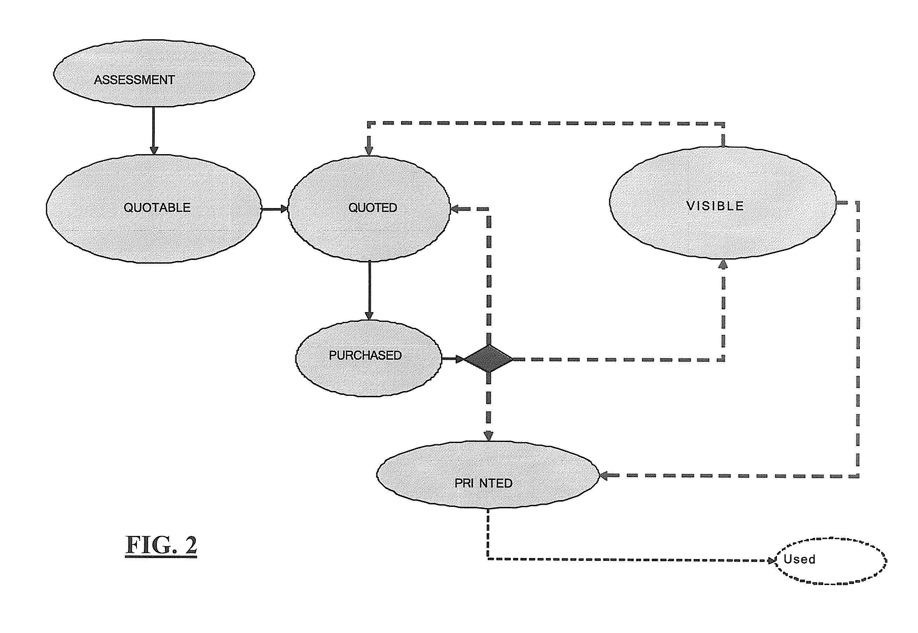

Figure 2 describes the method object of the invention by describing the diagram illustrating the possible states of the BTT System.
A Security is received and placed in "Assessment" state in the Commission Subsystem, which determines its degree of reliability and certifies rating thereof, according to a model and to predetermined and public parameters.
When approved by the Commission Subsystem, the Security switches to "Quotable" state and is transferred to the Commodity Exchange Subsystem. The Commission Subsystem ensures compliance of a Security to a standard and assigns an official rating.
In the Commodity Exchange Subsystem, the Security switches to "Quoted" state and remains visible and available until it is required by an operator and the Commodity Exchange Subsystem assigns sale thereof, according to the "Security assignment procedures" operations described below. The Security then switches to "Purchased" state.
In "Purchased" state, the Security is considered purchased by an operator according to the typical methods of the Security itself.
From "Purchased" state the Security may:

- switch to "Printed" state if the operator wants to "Print" the document as a voucher and use the service. This "Printed" state is irreversible: i.e. a travel or transport ticket is created entitling use of the service;
  or
- return to "Quoted" state if the operator asks the BTT System to put the Security back on the market to be possibly purchased by other operators,
  or
- switch to "Visible" state: in this state, the Security remains visible and available for a purchase request by other operators. In such a case, the operator may ask the BTT System to return the Security to "Quoted" state to be repurchased, for example, by sending an e-mail or text message, or other system. The BTT System sends the request to the original Operator, for example by e-mail, text message or other system, asking for authorisation to return the Security to "Quoted" state. In the affirmative case, the BTT System returns the Security to "Quoted" state making it fully available to be purchased. Therefore, its Security will be assigned again using the method described above.

In all cases, the Security will complete its lifecycle when the service is used and switch to "Used" state.
The BTT System is adapted to handle electronic documents, e.g. of the following types:

Request for quotation:

This document is inputted into the Commission Subsystem by the Proposer, specifying:

- comprehensive data characterising the service: Service type, required rating, dates, etc.
- The type of Security being offered: Ascending, descending, action, future.

- The required price proposal.

These data are described below in the "Security" document, excluding the Security code which will be determined by the Commission Subsystem according to the quality and quantity rating of the services included in the Security. Data may be edited by the Commission Subsystem.

Security:

This is a document certified by the Commission Subsystem and sent in computerised form to the Commodity Exchange Subsystem.

An example of "Security" type document is shown in the table below which may be implemented using a database table or data exchange file (e.g. using XML technology).

| Field | Example |
|---|---|
| **Security code** | A10319312313 |
| **Security type** | Ascending |
| **Description** | Hotel Sheraton New York Dec. 31 st, 07 |
| **Service type** | Facility |
| **Subtype** | Hotel |
| **Rating** | 4 star |
| **Place** | New York City |
| **Validity** | 12/30/2006-12/31/2006 |
| **Available quantity** | 10 |
| **Unit of measure for quantity** | Nights |
| ... all fields specifying the Security | |
| **Initial price** | 100 |
| **Start date** | 4/1/2006 |
| **End price** | 120 |
| **End date** | 12/28/2006 |

Purchase Request:

This document is created when an operator asks to purchase a Security.

An example of "Purchase Request" document type is shown in the following table which may be implemented by a data exchange file (e.g. using XML technology), transmitted from the operator's workstation to the Commodity Exchange Subsystem.

| Field | Example |
|---|---|
| **Purchase request number** | 1234567890 |
| **Operator's code** | 100100 |
| **Operator's name** | Andrea Baruffaldi |
| **Request date** | 1/27/2006 |
| **Request time** | 12:05:34 |
| **Requested Security** | A10319312313 |
| **Bided price** | 110 |

Purchase:

This document is created when an operator receives confirmation of Security purchase.

An example of "Purchase" document type is shown in the table below which may be implemented using a database table or data exchange file (e.g. using XML technology).

The purchased Security is extractable from the link to the Purchase Request number.

The "Check Code" is a safety code sent by the Commodity Exchange Subsystem to double-check veracity of the purchase (e.g. it may be sent using a different method, e.g. by e-mail).

| Field | Example |
|---|---|
| **Transaction number** | 23142352454534543534 |
| **Purchase request number** | 1234567890 |
| **Purchase date** | 1/27/2006 |
| **Purchase time** | 12:05: 58 |
| **Final price** | 112 |
| **Check code** | Xwdfkwweb ewf |

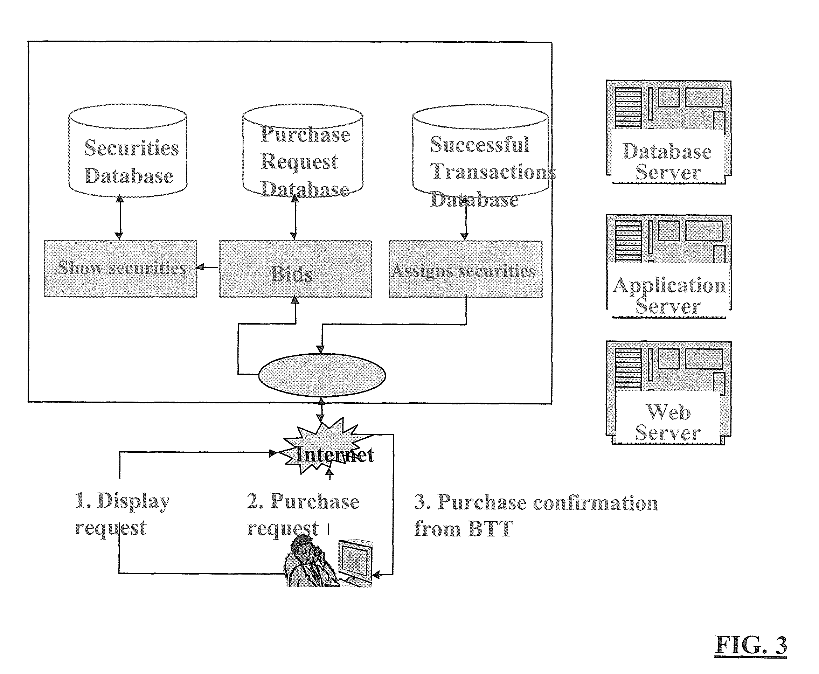

An example of implementation of the system is described with reference to figure 3.

The system comprises a Security Database, a Purchase Request Database, a Transaction Database, for example residing on a respective Server Database.

The Database management application, for example residing in a respective Application Server, access the database implementing all functions related to:

- viewing Securities (search, data sorting)
- listing bids (bid sorting)
- Security assigning algorithms.

The application may be implemented in a known way, using an Object Oriented method (Java or .NET). The application transmits data, such as for example Purchase Confirmations and views related for example to View Requests, Purchase Requests to the operator using web pages and the Internet with respective Web Server, according to known standards.

Below, some examples of Security assigning procedures referred to certain types of Securities, classified according to the type of value variation to which they are subject, are described, for example: Ascending Securities, Descending Securities, Variable Securities.

Ascending and descending Securities have a value always defined in a certain day, respectively ascending or descending, day by day, according to a certain progression defined on a case-by-case basis. These Securities are assigned on the basis of availability with priority given on the basis of time/minute/second of the operator's request.

Therefore, they are assigned in the following way:

- One or more Securities are selected from the available Securities list: the user asks the BTT System the prices of the purchased Securities by operating a specifically created and available "confirmation box" object. One or more Securities may be selected at the same time.
- The BTT System shows the list of bids for the selected Security(s) for sale, whose price is always the same for the current day, calculated by applying the following formula:

$$PRICE = PRICE_{starting} + (PRICE_{end} - PRICE_{starting}) * (DAYS \text{ elapased from start of validity/Total duration in DAYS})$$

- Purchase is confirmed by operating an appropriately created and available "purchase box" object.
- The BTT System creates and saves an electronic Purchase Request under the user's name.
- The BTT System offers the first Security which has not already been purchased by someone else.

If no Securities can be assigned because each available Security at the time of display has been purchased by someone else, the BTT System will not assign the Security and will immediately inform the user by displaying a "Purchase Failed" message and sending an e-mail.

- If the result is positive, the BTT System:

     1. immediately removes the Security from the negotiable Security list,
     2. assigns the Security to the buyer,
     3. creates the electronic Purchase document,
     4. shows a "Successful Purchase" message,
     5. sends an e-mail that certifies the completed transaction,
     6. the user receives the e-mail and may print the transaction page.

Variable Securities: these are variable value Securities for the purchases according to the instant of purchase and are assigned in the following way:
- a variable Security is selected from the available Security list,
- the BTT System receives a purchasable Security price request by operating an appropriately created and available "*purchase request*" object.
- The BTT System shows a list of five prices on sale for ascending values.
- Purchase is confirmed by operating an appropriately created and available "*purchase box*" object.
- The BTT System creates and saves an electronic Purchase Request under the user's name.
- The BTT System, starting from the first price, offers the first price which has not already been booked by someone else in a time invisible to the user (e.g. a few tenths of a second before).

If none of the five prices can be assigned, the BTT System does not assign the Security and immediately informs the user with an e-mail.
If the result is positive, the BTT System:

1. immediately removes the Security from the negotiable Security list,
2. assigns the Security to the buyer,
3. creates the electronic Purchase document and sends an e-mail to the buyer to make the performed transaction official.

The user receives the e-mail and may print the transaction page.
For example, if there are bidders of a Security for values of 100, 105, 110, 114, 115, the purchase of the Security is assigned at a value of 100 to the first operator who buys (unless it has been required by a second buyer in the meantime). The Security will be assigned at 105, etc. to the second operator requiring the same Security.
The situation is mirrored for sales.
Variable Securities have no dividends or interest.
Other Security types can be handled by the system without departing from the scope of protection of the invention, for example bonds, warrants, derivates, futures, rights, options, zero coupon bonds, structured products, global registered Securities, of the known type and present in the Stock Exchanges and Commodity Exchanges worldwide. Other particularities of the BTT System are:

System functions: system part on operator side

The operator (Producer, Distributor, Assembler, Customer) always enters the system via the Web application.
An authenticated user name and password according to IT security state of the art are required (e.g. SSL 3-protocol today).
Bid display: The operator searches the interesting bids at least by Type (package, travel, transport, etc.), Facility type (hotel, apartment), Location, Dimensions of the bid (e.g. at least 50 rooms), Rating, Price, Security Type (ascending, descending), Availability (e.g. by decreasing number of available rooms), etc.
The BTT System shows lists of Security bids, features and prices. The system shows only the Securities of the type for which the applying operator is enabled.
Bid Purchase Request: The operator chooses the Securities of interest and has two options:

- immediate buying the Securities at the displayed price,
- inputting a purchase request by entering the price offered for the purchase.

When decided, the operator presses the button and the data are sent to the BTT System. The BTT System processes the request and, if it can be satisfied, will inform of the successful transaction and a code which certifies it.

The present invention may be advantageously made by means of a computer program which may comprise encoding means for implementing one or more steps of the method, when this program is run on a computer. Therefore, it is intended that the scope of protection is extended to said computer program and also to computer readable means which comprise a recorded message, said computer readable means comprising program encoding means for implementing one or more steps of the method, when said program is run on a computer.

Other possible variants of the non-limitative described example are possible, without however departing from the scope of protection of the present invention, comprising all equivalent implementation for a person skilled in the art.

From the description above, a person skilled in the art is capable of implementing the object of the invention without introducing further constructive details.

**Claims**

1. A method for electronic quotation of services, particularly tourist or transport services, comprising the following steps of:

    - creating a Commodity Exchange Subsystem, adapted to store documents called Securities, representing said services, and to manage trading operations;
    - creating a Commission Subsystem, adapted to certify and rate said Securities and to authorise their issuance on said Commodity Exchange Subsystem;

    said Securities being subject to variations of state in said Commodity Exchange Subsystem comprising:

    - a "Quotable" state, when they are approved by said Commission Subsystem and transferred to said Commodity Exchange Subsystem;
    - a "Quoted" state, in which said Securities are visible and available to be sold;
    - a "Purchased" state in which said Security switch after the sale;
    - from said "Purchased" stated said Securities can either switch to an irreversible "Printed" state, in which said Securities can be used, or return to said "Quoted" state, or switch to a "Visible" state from which they can switch to said "Printed" state or return to said "Quoted" state

2. A method according to claim 1, **characterised in that** it comprises steps of assigning Securities according to the type of variation of the value to which they are subject.

3. A method according to claim 2, **characterised in that** said Securities rated according to the type of value variation comprise Ascending Securities and Descending Securities, provided with a value always defined on a certain day, respectively ascending or descending, day by day, according to a certain progression, said Securities being assigned with priority given according to the request instant.

4. A method according to claim 3, **characterised in that** said Ascending Securities and Descending Securities are assigned by means of the following operations:

    - one or more Securities are selected from the available Securities list;
    - the list of sales is shown offering for the selected Security(s), whose price is always the same for the current day, calculated by applying the following formula:

$$\text{PRICE} = \text{PRICE}_{starting} + (\text{PRICE}_{end} - \text{PRICE}_{starting}) * (\text{DAYS elapsed from start of validity/Total duration in DAYS})$$

    - purchase confirmation;
    - creation and storage of a Purchase Request;
    - bidding for the first Security which has not already been purchased.

5. A method according to claim 4, **characterised in that** if no Security is assigned, because all available Securities have been purchased by someone else, the Security is not assigned and an announcement is output; if instead the Security is assigned, said Security is removed from the negotiated Security list, assigned to the buyer and an electronic Purchase document is created.

6. A method according to claim 2, **characterised in that** said Securities classified according to the type of value variation comprise Variable Securities, provided with variable values for the buyer, according to the instant of purchase.

7. A method according to claim 6, **characterised in that** said Variable Securities are assigned by means of the following operations:

   - a variable Security is selected from an available Security list,
   - a purchasable Security price request is received;
   - a list of prices on sale for ascending values is shown;
   - a purchase is confirmed;
   - an electronic Purchase Request is created and saved under the user's name;
   - starting from the first available price, the first price which has not already been booked is offered.

8. A method according to claim 7, **characterised in that** if none of said prices is assigned, the Security is not assigned; if a price is assigned, the Security is removed from a list of negotiable Securities, the Security is assigned, an electronic Purchase document is created.

9. A method according to claim 1, **characterised in that** it envisages the issuance and purchasing of Securities by various Operator subject types, comprising:

   Producer: Person or company who provides tourist services and decides to issue them on the market in the form of Securities;
   Distributor: Travel agency;
   Assembler: Person or company who produces a package at a price;
   Customer: Person or company who purchases the Securities and uses the services;
   Proposer: The operator who asks to issue Securities on the Commission System and who may be a Producer, Distributor or Assembler.

10. A system for electronic quotation of services, particularly tourist services, **characterised in that** it comprises:

   - a Commodity Exchange Subsystem, adapted to contain Securities representing said tourist services, and to manage trading actions thereof;
   - a Commission Subsystem, adapted to certify and rate said Securities and authorise their issuance on said Commodity Exchange Subsystem;

   and further **characterised in that** it comprises means for determining variations of state of said Securities comprising:

   - a "Quotable" state, when they are approved by said Commission Subsystem and transferred to said Commodity Exchange Subsystem;
   - a "Quoted" state, in which said Securities are visible and available to be sold;
   - a "Purchased" state to which said Securities switch after the sale;
   - from said "Purchased" stated said Securities can either switch to an irreversible "Printed" state in which said Securities can be used, or return to said "Quoted" state, or switch to a "Visible" state from which they can switch to said "Printed" state or return to said "Quoted" state.

11. A system according to claim 10, **characterised in that** it comprises means for assigning Securities according to the type of variation of the value to which they are subject.

12. A system according to claim 11, **characterised in that** said Securities rated according to the type of value variation comprise Ascending Securities and Descending Securities, provided with a value always defined on a certain day, respectively ascending or descending, day by day, according to a certain progression, said Securities being assigned with priority given according to the request instant.

**13.** A system according to claim 12, **characterised in that** it comprises means for assigning said Ascending Securities and Descending Securities by means of the following operations:

- one or more Securities are selected from the available Securities list;
- the list of sales is shown offering for the selected Security(s), whose price is always the same for the current day, calculated by applying the following formula:

$$\text{PRICE} = \text{PRICE}_{starting} + (\text{PRICE}_{end} - \text{PRICE}_{starting}) * (\text{DAYS elapsed from start of validity/Total duration in DAYS})$$

- purchase confirmation;
- creation and storage of a Purchase Request;
- bidding for the first Security which has not already been purchased.

**14.** A system according to claim 13, **characterised in that** if no Security is assigned, because all available Securities have been purchased by someone else, the Security is not assigned and an announcement is output; if instead the Security is assigned, said Security is removed from the negotiated Security list, assigned to the buyer and an electronic Purchase document is created.

**15.** A system according to claim 14, **characterised in that** said Securities classified according to the type of value variation comprise Variable Securities, provided with ascending values for the buyer, according to the instant of purchase.

**16.** A system according to claim 15, **characterised in that** it comprises means for assigning said Variable Securities by means of the following operations:

- a variable Security is selected from an available Security list,
- a purchasable Security price request is received;
- a list of prices on sale for ascending values is shown;
- a purchase is confirmed;
- an electronic Purchase Request is created and saved under the user's name;
- starting from the first available price, the first price which has not already been booked is offered.

**17.** A system according to claim 16, **characterised in that** if none of said prices is assigned, the Security is not assigned; if a price is assigned, the Security is removed from a list of negotiable Securities, the Security is assigned, an electronic Purchase document is created.

**18.** A system according to claim 10, **characterised in that** it comprises means for processing documents comprising, in addition to said Securities:

- Request for Quotation: document issued on said Commission Subsystem, specifying: data characterising the service; type of Security offered, value;
- Purchase Request: document created when the purchase of a Security is required;
- Purchase: document created when confirmation of purchase of a Security is received.

**19.** A system according to claim 18, **characterised in that** it comprises:

- a Security Database, a Purchase Request Database, a Transaction Database, possibly residing on a respective Server Database;
- means for running a Database management application , possibly residing on a respective Application Server, adapted to access said database implementing the functions of:

    - viewing Securities (search, data sorting);
    - listing bids (bid sorting);
    - Security assigning procedures;

- data transmission means via the Internet.

**20.** A system according to claim 10, **characterised in that** it comprises means for issuing and purchasing Securities by various Operator subject types, comprising:

Producer: Person or company who provides tourist services and decides to issue them on the market in the form of Securities;
Distributor: Travel agency;
Assembler: Person or company who produces a package at a price;
Customer: Person or company who purchases the Securities and uses the services;
Proposer: The operator who asks to issue Securities on the Commission System and who may be one of the Producer, Distributor or Assembler themselves.

**21.** A computer program comprising program encoding means adapted to implement the steps in claims from 1 to 9, when said program is run on a computer.

**22.** Computer readable means comprising a recorded program, said computer readable means comprising program encoding means adapted to implement the steps of claims from 1 to 9, when said program is run on a computer.

FIG. 1

FIG. 2

FIG. 3

**European Patent Office**

**DECLARATION**

which under Rule 45 of the European Patent Convention
shall be considered, for the purposes of subsequent
proceedings, as the European search report

**Application Number**

EP 06 42 5319

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason:<br><br>The claims of the application are formulated to merely specify commonplace features relating to matter excluded from patentability under Art. 52(2) and (3) EPC and its technological implementation. Due to the attendant lack of resolution of technical definition present, the search division could not establish a technical problem addressed in order to be able to carry out a meaningful search into the state of the art (Rule 45 EPC). See also Guidelines Part B Chapter VIII. Accordingly no search has been carried out.<br><br>The applicant's attention is drawn to the fact that a search may be carried out during examination following a declaration of no search under Rule 45 EPC, should the problems which led to the declaration being issued be overcome (see EPC Guideline C-VI, 8.5).<br>----- | INV.<br>G06Q30/00 |

| Place of search | Date | Examiner |
|---|---|---|
| The Hague | 5 September 2006 | Cîrstet, A |

EPO FORM 1504 (P04C37)